(19)

Europäisches Patentamt

European Patent Office

Office européen des brevets

(11) **EP 3 665 057 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **18736813.9**

(22) Anmeldetag: **18.06.2018**

(51) Internationale Patentklassifikation (IPC):
**B60W 40/064** *(2012.01)*    **B60W 40/068** *(2012.01)*
**G01N 19/02** *(2006.01)*

(52) Gemeinsame Patentklassifikation (CPC):
**B60W 40/068; B60W 40/064; G01N 19/02;**
B60T 2210/12; B60W 2555/00; B60W 2556/50;
B60W 2556/55; B60W 2556/65

(86) Internationale Anmeldenummer:
**PCT/EP2018/066129**

(87) Internationale Veröffentlichungsnummer:
**WO 2019/029882 (14.02.2019 Gazette 2019/07)**

(54) **VERFAHREN UND VORRICHTUNG ZUM ERMITTELN EINES REIBWERTES EINER FAHRBAHN**

METHOD AND DEVICE FOR ASCERTAINING A FRICTIONAL VALUE OF A ROADWAY

PROCÉDÉ ET DISPOSITIF POUR DÉTERMINER UN COEFFICIENT DE FROTTEMENT D'UNE CHAUSSÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2017   DE 102017214070**

(43) Veröffentlichungstag der Anmeldung:
**17.06.2020   Patentblatt 2020/25**

(73) Patentinhaber: **Robert Bosch GmbH**
**70442 Stuttgart (DE)**

(72) Erfinder:
• **GEISLER, Simon**
  **74072 Heilbronn (DE)**
• **LELLMANN, Christian**
  **70435 Stuttgart (DE)**

(56) Entgegenhaltungen:
**DE-A1-102016 014 547**

• **KWON TAE J ET AL: "Modelling of winter road surface temperature (RST) - A GIS-based approach", 2017 4TH INTERNATIONAL CONFERENCE ON TRANSPORTATION INFORMATION AND SAFETY (ICTIS), IEEE, 8. August 2017 (2017-08-08), Seiten 551-556, XP033154995, DOI: 10.1109/ICTIS.2017.8047820 [gefunden am 2017-09-20]**
• **KYLE SCHMITT ET AL: "A Gaussian Process-Based Approach for Handling Uncertainty in Vehicle Dynamics Simulation", 2008 ASME INTERNATIONAL MECHANICAL ENGINEERING CONGRESS AND EXPOSITION, IMECE 2008, 12. Juni 2008 (2008-06-12), Seiten 617-628, XP055500668, USA DOI: 10.1115/IMECE2008-66664 ISBN: 978-0-7918-4872-2**
• **Bayley: "Ordinary Kriging (Ch. 5.5 -Bailey & Gatrell)", , 22. März 2012 (2012-03-22), XP055500710, Gefunden im Internet: URL:https://msu.edu/~ashton/classes/866/papers/gatrell_ordkrige.pdf [gefunden am 2018-08-20]**
• **Andreas Lichtenstern: "Kriging methods in spatial statistics", , 31. August 2013 (2013-08-31), XP055502280, Gefunden im Internet: URL:https://mediatum.ub.tum.de/doc/1173364/file.pdf [gefunden am 2018-08-27]**

**Beschreibung**

Die vorliegende Erfindung betrifft allgemein das Gebiet der Ermittlung von Reibwerten einer Fahrbahn. Die Erfindung betrifft ein computerimplementiertes Verfahren zum Ermitteln eines Reibwerts einer Fahrbahn gemäß Anspruch 1, sowie eine entsprechende Vorrichtung gemäß Anspruch 11.

Stand der Technik

Reibwerte für Fahrbahnen, wie etwa Straßen, Parkplätze, Rollfelder und/oder Startbahnen auf Flughäfen, werden häufig basierend auf einer direkten und aktiven Reibwertmessung ermittelt und/oder gemessen. Zur aktiven Reibwertmessung werden in der Regel spezielle Messfahrzeuge mit einer Reibwertmesstechnik eingesetzt. Beispiele für derartige Messfahrzeuge sind der sogenannte "Surface Friction Tester" sowie die "Sideway-force Coefficient Routine Investigation Machine", bei welchen Reibmesswerte der Fahrbahn basierend auf einer Kraftmessung ermittelt werden. Beispielsweise kann das Messfahrzeug über einen Fahrzeuganhänger mit drei Rädern verfügen, wobei das dritte Rad in den physikalischen Grenzbereich, d.h. bis zum Reifenstillstand, abgebremst werden kann. Über die dazu nötige Bremskraft und/oder das dazu nötige Bremsmoment lässt sich die Reibkraft und mit Hilfe der bekannten Normalkraft der Reibwert zwischen Fahrbahn und dem dritten Rad bestimmen. Alternativ kann die Reibkraft beispielsweise über eine Seitenkraft eines fünften, um etwa 20° zur Fahrtrichtung geneigten Rades ermittelt werden. Auch in diesem Fall kann der Reibwert unter Kenntnis der Normalkraft bestimmt werden. Derartige Messverfahren können allerdings aufgrund der darin eingesetzten aufwändigen Messtechnik nicht ohne großen Aufwand in Serien-Fahrzeugen eingesetzt werden.

Auch finden zunehmend passive Messverfahren zur Ermittlung von Reibwerten Einsatz. In derartigen Messverfahren kann basierend auf Sensordaten von Fahrzeugen, wie etwa Daten von Beschleunigungssensoren, Gyrosensoren, ESP-Sensoren, Drehratensensoren oder dergleichen, sowie Wetterdaten und/oder Straßensensordaten, wie beispielsweise Glättesensoren, Feuchtigkeitssensoren und/oder Temperatursensoren, ein Reibwert für eine Position und/oder einen Abschnitt der Fahrbahn ermittelt werden.

Aus: Kwon Tae J et al.: "Modelling of winter road surface temperature", 2017, 4TH ICTIS, Seiten 551-556, ist ein Verfahren zum Ermitteln eines Reibwertes einer Fahrbahn bekannt, wobei Regression-Kriging für die Prädiktion von Straßentemperaturen angewandt wird.

Aus: Kyle Schmitt et al.: "A Gaussian Process-Based Approach for Handling Uncertainty in Vehicle Dynamics Simulation", 2008, IMECE, Seiten 617-628, ist weiterhin die Bestimmung von Trends, d.h. Elementen eines Semivariogramms eines Krigingschätzers mit Neuronalen Netzen offenbart.

Offenbarung der Erfindung

Mit Ausführungsformen der Erfindung können in vorteilhafter Weise Reibwerte einer Fahrbahn zuverlässig, schnell und mit hoher Genauigkeit ermittelt werden.

Ein Aspekt der Erfindung betrifft ein computerimplementiertes Verfahren zum Ermitteln eines Reibwertes einer Fahrbahn.

Der Reibwert kann dabei einen Reibungskoeffizienten zwischen der Fahrbahn und dem Fahrzeug bezeichnen. Die Fahrbahn kann dabei eine Straße, einen Parkplatz, ein Rollfeld, eine Startbahn und/oder jede andere von einem Fahrzeug befahrbare Fläche bezeichnen. Das Verfahren weist dabei den Schritt des Bereitstellens eines Datensatzes, etwa in einer Speichervorrichtung und/oder einem Datenspeicher einer Datenverarbeitungsvorrichtung, mit Reibmesswerten der Fahrbahn auf, wobei jeder der Reibmesswerte einen Reibungskoeffizienten der Fahrbahn, insbesondere einen Reibungskoeffizienten zwischen der Fahrbahn und dem Fahrzeug, an einer Messposition zu einem Messzeitpunkt angibt. Das computerimplementierte Verfahren zeichnet sich durch die entsprechenden Merkmale des Anspruchs 1 aus.

Das Semivariogramm, auch Variogramm genannt, kann etwa gemäß der allgemein üblichen Definition, eine räumliche und zeitliche Beziehung und/oder Korrelation jedes der Reibmesswerte der Teilmenge der Reibmesswerte zu den weiteren Reibmesswerten der Teilmenge bezeichnen. Im Allgemeinen kann das Semivariogramm und/oder das Variogramm Semivarianzen der Reibmesswerte der Teilmenge von Reibmesswerten als Funktion des Ortes und als Funktion der Zeit beinhalten. Unter Verwendung des Semivariogramms und/oder des Variogramms kann in vorteilhafter Weise die räumliche und zeitliche Beziehung bzw. die räumliche und zeitliche Korrelation zwischen den Reibmesswerten der Teilmenge modelliert werden. Gleichsam kann der Schritt des Modellierens des räumlichen und zeitlichen Zusammenhangs zwischen zumindest einer Teilmenge der Reibmesswerte basierend auf einem Semivariogramm ein Modellieren des Semivariogramms aufweisen und/oder bezeichnen.

Der gewichtete Mittelwert kann insbesondere eine Summe der Reibmesswerte der Teilmenge bezeichnen, wobei jeder der Reibmesswerte mit dem für den jeweiligen Reibmesswert ermittelten Wichtungsfaktor gewichtet und/oder multipliziert sein kann. Mit anderen Worten kann der gewichtete Mittelwert die Summe der Reibmesswerte der Teilmenge, jeweils multipliziert mit dem zugehörigen Wichtungsfaktor, bezeichnen. Die Wichtungsfaktoren können dabei jeweils relativ zu dem Zeitpunkt und der Fahrbahnposition ermittelt werden, für welchen und für welche der Reibwert bestimmt wird.

Das computerimplementierte Verfahren kann als auf den nachfolgend beschriebenen Erkenntnissen beruhend angesehen werden. Mittels aktiver Messverfahren und/oder mittels passiver Verfahren zur Bestimmung von Reibmesswerten einer Fahrbahn können Reibmesswerte an bestimmten Messpositionen für bestimmte Messzeitpunkte ermittelt werden. Beispielsweise können im Rahmen passiver Verfahren basierend auf Fahrzeugdaten, Wetterdaten und/oder Straßensensordaten räumlich verteilte Reibmesswerte, gegebenenfalls mit einer zugehörigen Messunsicherheit, zum jeweiligen Messzeitpunkt ermittelt werden. Diese Reibmesswerte können etwa in dem Datensatz zusammengefasst werden, wobei räumlich und/oder zeitlich zwischen den Reibmesswerten des Datensatzes keine Reibmesswerte vorliegen können. In gewissen räumlichen und/oder zeitlichen Bereichen können sich daher die Reibmesswerte des Datensatzes häufen, wohingegen in anderen Bereichen nur wenige oder gar keine Reibmesswerte vorhanden sein können. Zudem können die Reibmesswerte des Datensatzes auch zu unterschiedlichen Zeiten ermittelt sein und sich aus diesem Grund zumindest teilweise voneinander unterscheiden. Um basierend auf einem solchen Datensatz von Reibmesswerten einen Reibwert für die räumlichen und zeitlichen Zwischenräume zu ermitteln, ist erfindungsgemäß vorgesehen, zumindest für eine Teilmenge des Datensatzes den räumlichen und zeitlichen Zusammenhang der Reibmesswerte der Teilmenge basierend auf dem Semivariogramm zu ermitteln. Basierend auf dem Semivariogramm kann in vorteilhafter Weise die räumliche und zeitliche Beziehung und/oder Korrelation der Reibmesswerte der Teilmenge ermittelt werden. Dies wiederum kann es erlauben, mit hoher Präzision und/oder Genauigkeit einen Reibwert zu ermitteln, welcher räumlich zwischen den Reibmesswerten liegt. Zudem kann mit hoher Präzision und/oder Genauigkeit ein Reibwert für einen beliebigen Zeitpunkt ermittelt werden, wobei dieser Zeitpunkt relativ zu den Messzeitpunkten der Reibmesswerte in der Gegenwart, der Zukunft oder der Vergangenheit liegen kann. Basierend auf dem Semivariogramm kann daher ein Reibwert in zeitlicher Hinsicht präzise prädiziert werden.

Das computerimplementierte Verfahren erlaubt es somit eine beliebige Anzahl von Reibwerten für beliebige Fahrbahnpositionen und/oder für beliebige Zeitpunkte basierend auf dem Datensatz von Reibmesswerten zu ermitteln. Somit kann in vorteilhafter Weise eine Reibwertkarte, welche eine Straßenkarte mit den zugehörigen Reibwerten der Straßen der Straßenkarte bezeichnen kann, ermittelt werden. Gleichsam kann das erfindungsgemäße Verfahren ein Verfahren zum Ermitteln und/oder Erstellen einer Reibwertkarte bezeichnen. Zudem kann das Verfahren ein Verfahren zum Ermitteln eines Reibwertes und/oder Erstellen einer Reibwertkarte basierend auf einem Kriging, insbesondere einem spatio-temporalen Kriging, bezeichnen.

Das Verfahren ermöglicht somit in vorteilhafter Weise, dass neben der räumlichen Modellierung eine beliebige Anzahl von Reibmesswerten, analog einem Schwarmwissen, genutzt werden können. So können Einflüsse einzelner Messfehler und/oder Unsicherheiten der Reibmesswerte auf die Genauigkeit der ermittelten Reibwerte geringgehalten werden, da eine statistische Auswertung der Reibmesswerte basierend auf dem Semivariogramm eine hohe Genauigkeit erlaubt. Zudem können auch in räumlichen und/oder zeitlichen Bereichen, in welchen nur wenig Reibmesswerte vorliegen, zuverlässige und präzise Reibwerte ermittelt und/oder prädiziert werden. Damit kann in vorteilhafter Weise eine flächendeckende Reibwertkarte erstellt werden. Auch wird eine Genauigkeit des ermittelten Reibwertes nicht dadurch negativ beeinflusst, dass die Reibmesswerte zu verschiedenen Messzeitpunkten ermittelt wurden, jedoch die Prädiktion des Reibwertes nur zu einem gewissen Zeitpunkt erfolgen soll. Ein Weiterer Vorteil ist, dass dieser Zeitpunkt in der Gegenwart, Vergangenheit oder auch in der Zukunft liegen kann. Auch kann das erfindungsgemäße Verfahren kosteneffizient einer beliebigen Anzahl von Nutzern, beispielsweise Verkehrsteilnehmern, zur Verfügung gestellt werden, wobei das Verfahren auch mit anderen Connectivity-Funktionen von Fahrzeugen kombiniert werden kann. Damit können zusätzliche Informationen über Fahrbahnen und/oder Straßenabschnitte bereitgestellt werden, obwohl die Fahrbahn beispielsweise noch nicht mit dem eigenen Fahrzeug befahren wurde.

Gemäß einer Ausführungsform der Erfindung weist der Schritt des Modellierens basierend auf dem Semivariogramm ein Ermitteln einer Semivarianz zwischen jeweils zwei Reibmesswerten der Teilmenge der Reibmesswerte auf. Mit anderen Worten kann für jeden Reibmesswert der Teilmenge eine Semivarianz zu jedem weiteren Reibmesswert der Teilmenge ermittelt werden. Allgemein können die ermittelten Semivarianzen ein zuverlässiges Maß für eine räumliche und zeitliche Streuung und/oder Korrelation der Reibmesswerte darstellen, so dass basierend auf den Semivarianzen ein Semivariogramm erstellt werden kann, welches den räumlichen und/oder zeitlichen Zusammenhang zwischen den Reibmesswerten der Teilmenge umfassend abbilden kann.

Gemäß einer Ausführungsform der Erfindung werden die Semivarianzen jeweils in Abhängigkeit eines räumlichen Abstands zwischen den Positionen der zwei Reibmesswerte ermittelt. Alternativ oder zusätzlich können die Semivarianzen jeweils in Abhängigkeit eines zeitlichen Abstands der Messzeitpunkte der zwei Reibmesswerte ermittelt werden. Eine Darstellung und/oder Modellierung der Semivarianzen als Funktion der räumlichen und zeitlichen Abstände kann insbesondere einen Rechenaufwand und/oder eine Rechenzeit zur Ermittlung des Semivariogramms reduzieren.

Gemäß einer Ausführungsform der Erfindung, weist der Schritt des Modellierens basierend auf dem Semivariogramm ein Erstellen einer Semivarianzmatrix basierend auf den ermittelten Semivarianzen auf. Das Erstellen einer Semivarianzmatrix kann in vorteilhafter Weise eine kompakte und umfassende Darstellung der ermittelten Semivarianzen erlauben, welche zeiteffizient weiterverarbeitet werden kann.

Gemäß einer Ausführungsform der Erfindung weist der Schritt des Modellierens basierend auf dem Semivariogramm ein Ermitteln einer Kovarianz zwischen jeweils zwei Reibmesswerten der Teilmenge der Reibmesswerte auf. Alternativ oder zusätzlich kann der Schritt des Modellierens basierend auf dem Semivariogramm ein Erstellen einer Kovarianzmatrix aufweisen. Ähnlich zu den Semivarianzen können die Kovarianzen ein zuverlässiges Maß für eine räumliche und/oder zeitliche Streuung und/oder Korrelation der Reibmesswerte darstellen, so dass basierend auf den Kovarianzen ein Semivariogramm erstellt werden kann, welches den räumlichen und/oder zeitlichen Zusammenhang zwischen den Reibmesswerten der Teilmenge umfassend abbilden kann.

Gemäß einer Ausführungsform der Erfindung gibt jeder der Wichtungsfaktoren einen räumlichen und zeitlichen Zusammenhang zwischen dem zugehörigen Reibmesswert und dem Reibwert an, wobei eine Summe der Wichtungsfaktoren eins sein kann. Mit anderen Worten kann der basierend auf dem Semivariogramm modellierte räumliche und zeitliche Zusammenhang zwischen den Reibmesswerten in die ermittelten Wichtungsfaktoren einfließen, so dass basierend auf den für jeden Reibmesswert ermittelten Wichtungsfaktoren der Reibwert präzise für beliebige Fahrbahnpositionen und/oder für beliebige Zeitpunkte ermittelt werden kann.

Gemäß einer Ausführungsform der Erfindung weist der Schritt des Modellierens basierend auf dem Semivariogramm ein Ermitteln eines funktionellen Zusammenhangs zwischen den Semivarianzen und/oder zwischen mit den Semivarianzen korrelierenden Größen, wie beispielsweise Kovarianzen, auf. Mit anderen Worten kann eine Semivarianz für alle Reibmesswerte der Teilmenge als Funktion des Ortes und der Zeit ermittelt werden. Alternativ oder zusätzlich weist der Schritt des Modellierens basierend auf dem Semivariogramm ein Fitten einer Funktion an die Semivarianzen und/oder an mit den Semivarianzen korrelierenden Größen, beispielsweise Kovarianzen, auf. Durch das Fitten der Funktion kann in vorteilhafter Weise eine geschlossene analytische Funktion für die Semivarianzen in Abhängigkeit des Ortes und/oder der Zeit ermittelt werden, welche ohne großen Rechenaufwand weiterverarbeitet werden kann.

Gemäß einer Ausführungsform der Erfindung weist das Verfahren weiter den Schritt des Ermittelns einer Varianz und/oder einer Unsicherheit des ermittelten Reibwertes basierend auf den ermittelten Wichtungsfaktoren auf. Insbesondere zur Erstellung einer Reibwertkarte kann es vorteilhaft sein, eine Unsicherheit des Reibwertes zu bestimmen, so dass beispielsweise unter Berücksichtigung der Unsicherheit eine Geschwindigkeit des Fahrzeugs angepasst werden kann. Gemäß einer Ausführungsform der Erfindung weist das Verfahren ferner den Schritt des Ermittelns einer Mehrzahl von Reibwerten an einer Mehrzahl von Fahrbahnpositionen und für eine Mehrzahl von Zeitpunkten, sowie den Schritt des Erstellens einer Reibwertkarte basierend auf der Mehrzahl von ermittelten Reibwerten auf. Eine derartige Reibwertkarte kann insbesondere im Hinblick auf ein autonomes Fahren von Fahrzeugen vorteilhaft sein, da basierend auf einer solchen Reibwertkarte beispielsweise automatisch eine Geschwindigkeit eines Fahrzeuges an den aktuell vorliegenden Reibwert angepasst werden kann.

Entwicklungen im Bereich vernetzter Fahrzeuge und/oder im Bereich autonomen Fahrens können etwa mittels Connectivity-Einheiten einen Austausch von Sensorik-Daten über eine aktuelle Fahrbahn, eine Geschwindigkeit, eine Verkehrssituation oder Ähnliches erlauben. Durch die Verarbeitung solcher Daten und den daraus resultierenden Informationsgewinn über die Fahrbahn können automatisiertes Fahren und prädiktive Fahrerassistenzsysteme mit einem Zugewinn an Sicherheit vorangetrieben werden. Dem Fahrzeug können so Informationen über die Umgebung breitgestellt werden, die es mit fahrzeugeigener Sensorik nicht generieren könnte. Da es üblicherweise keine Reibwertsensoren für Fahrzeuge, insbesondere nicht für Personenkraftwagen, gibt, kann das Erstellen und Bereitstellen der Reibwertkarte einen zusätzlichen Informationsgewinn liefern. Eine solche Reibwertkarte kann dann zur weiteren Funktionsentwicklung mit dem Ziel der Erhöhung von Sicherheit und Komfort verwendet werden. Reibwerte in einer Reibwertkarte eingetragen, können hier zum Beispiel genutzt werden, um automatisiert Fahrzeuggeschwindigkeiten zum Beispiel vor Kurven zu setzen. So können gefährliche Situationen oder Unfälle durch Abkommen von der Fahrspur, vor allem bei schwierigen Straßenverhältnissen wie Nässe oder Schnee, vermieden werden.

Gemäß einer Ausführungsform der Erfindung weist das Verfahren ferner den Schritt des Empfangens, von einem Verkehrsteilnehmer, einer Anfrage für einen Reibwert an einer Anfrageposition und für einen Anfragezeitpunkt auf. Weiter weist das Verfahren den Schritt des Ermittelns des Reibwertes an der Anfrageposition und/oder für den Anfragezeitpunkt auf. Der Anfragezeitpunkt kann dabei in der Gegenwart, der Vergangenheit oder der Zukunft liegen. Ferner weist das Verfahren den Schritt des Bereitstellens des ermittelten Reibwertes an den Verkehrsteilnehmer auf. Mit anderen Worten kann das erfindungsgemäße Verfahren beispielsweise in einem Server und/oder einer serverbasierten Datenverarbeitungsvorrichtung implementiert sein. Verkehrsteilnehmer können dabei für beliebige Anfragepositionen und/oder zu beliebigen Anfragezeitpunkten in Echtzeit einen Reibwert anfragen und entsprechend den ermittelten Reibwerten beispielsweise ein Fahrverhalten, wie etwa eine Geschwindigkeit, anpassen. Auch kann so eine Funktionalität des erfindungsgemäßen Verfahrens einer beliebigen Anzahl von Verkehrsteilnehmern zur Verfügung gestellt werden, ohne dass etwa eine kostenintensive Aufrüstung der Fahrzeuge notwendig wäre.

Ein weiterer Aspekt der Erfindung betrifft eine Datenverarbeitungsvorrichtung zum Ermitteln eines Reibwertes einer Fahrbahn, wobei die Datenverarbeitungsvorrichtung dazu eingerichtet ist, das Verfahren, so wie voranstehend und nachfolgend beschrieben, auszuführen. Die Datenverarbeitungsvorrichtung kann dabei auch ein Netzwerk von Datenverarbeitungseinrichtungen, etwa eine Cloud-Umgebung, bezeichnen.

Merkmale, Elemente, Funktionen und/oder Schritte des Verfahrens, so wie voranstehend und nachfolgend beschrieben, können Merkmale, Elemente und/oder Funktionen der Datenverarbeitungsvorrichtung, so wie voranstehend und nachfolgend beschrieben, sein, und umgekehrt.

Gemäß einer Ausführungsform der Erfindung weist die Datenverarbeitungsvorrichtung einen Datenspeicher zur Speicherung eines Datensatzes von Reibmesswerten der Fahrbahn, einen Prozessor und eine Schnittstelle zum Übertragen eines Reibwertes auf. In dem Datenspeicher kann ein Programmelement hinterlegt sein, das, wen es auf dem Prozessor ausgeführt wird, die Datenverarbeitungsvorrichtung anleitet, Schritte des Verfahrens, so wie voranstehend und nachfolgend beschrieben, auszuführen. Die Schnittstelle kann insbesondere eine drahtlose Schnittstelle zur bidirektionalen Kommunikation zwischen einem Fahrzeug und der Datenverarbeitungsvorrichtung sein. Die Kommunikation kann etwa über Internet, ein Mobilfunknetz und/oder ein Telefonnetz erfolgen. Über die Schnittstelle kann etwa die Anfrage des Reibwertes von dem Fahrzeug empfangen und der daraufhin ermittelte Reibwert an das Fahrzeug gesendet werden.

Kurze Beschreibung der Zeichnungen

Im Folgenden werden Ausführungsbeispiele der Erfindung mit Bezug auf die beiliegenden Figuren detailliert beschrieben.

Fig. 1 zeigt eine Datenverarbeitungsvorrichtung gemäß einem Ausführungsbeispiel der Erfindung.

Fig. 2 zeigt ein System mit einer Datenverarbeitungsvorrichtung gemäß einem Ausführungsbeispiel der Erfindung.

Fig. 3 zeigt ein Flussdiagramm zur Illustration von Schritten eines Verfahrens zum Ermitteln eines Reibwerts gemäß einem Ausführungsbeispiel der Erfindung.

Fig. 4 zeigt ein Flussdiagramm zur Illustration von Schritten eines Verfahrens zum Ermitteln eines Reibwerts gemäß einem Ausführungsbeispiel der Erfindung.

Die Figuren sind lediglich schematisch und nicht maßstabsgetreu. In den Figuren sind gleiche, gleich wirkende oder ähnliche Elemente mit gleichen Bezugszeichen versehen.

Ausführungsformen der Erfindung

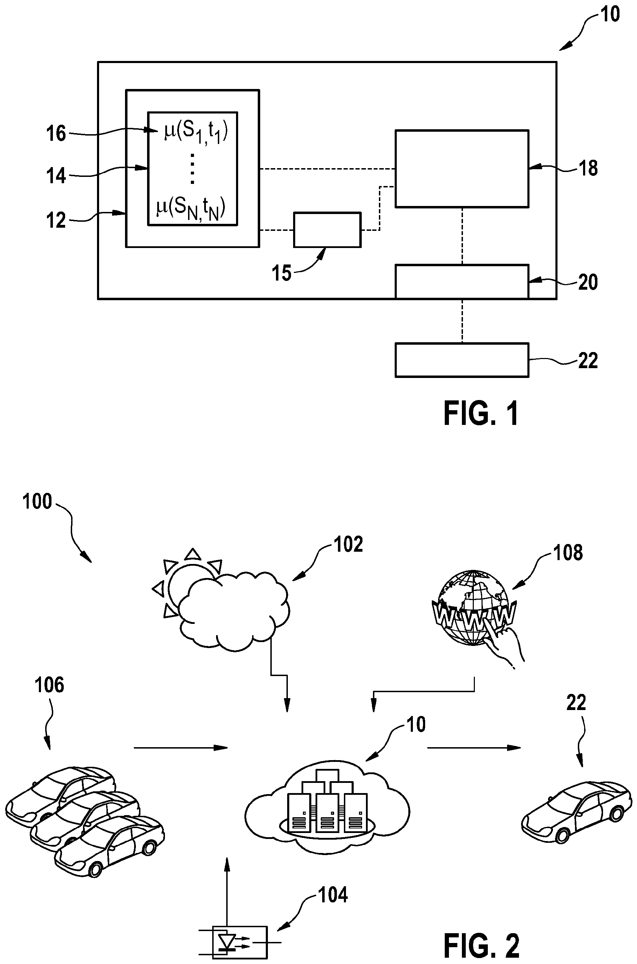

Fig. 1 zeigt eine Datenverarbeitungsvorrichtung 10 gemäß einem Ausführungsbeispiel der Erfindung.

Die Datenverarbeitungsvorrichtung 10 weist einen Datenspeicher 12 zur Speicherung eines Datensatzes 14 von Reibmesswerten 16, dargestellt als $\mu(s_i, t_i)$, mit i=1...N, auf, wobei $s_i$ eine Messposition, Ortskoordinaten der Messposition und/oder einen Ortsvektor der Messposition und $t_i$ einen Messzeitpunkt bezeichnen.

Ferner weist die Datenverarbeitungsvorrichtung 10 einen Prozessor 18 auf. In dem Datenspeicher 12 und/oder einer weiteren Datenspeichereinrichtung der Datenverarbeitungsvorrichtung 10 kann etwa ein Programmelement hinterlegt sein, das, wenn es auf dem Prozessor 18 ausgeführt wird, die Datenverarbeitungsvorrichtung 10 anleitet, Schritte des Verfahrens zum Ermitteln eines Reibwertes, so wie voranstehend und nachfolgend beschrieben, auszuführen.

Des Weiteren weist die Datenverarbeitungsvorrichtung 10 eine Schnittstelle 20 auf. Die Schnittstelle 20 kann insbesondere eine Schnittstelle 20 zur drahtlosen Kommunikation mit einem Verkehrsteilnehmer 22, etwa einem Fahrzeug 22, sein. Beispielsweise kann die Schnittstelle 20 zur bidirektionalen Kommunikation mit dem Verkehrsteilnehmer 22 ausgestaltet sein, wobei die Kommunikation beispielsweise über Internet, ein Mobilfunknetz, ein Telefonnetz und/oder ein anderes geeignetes Datenübertragungsnetz erfolgen kann. Der Verkehrsteilnehmer 22 kann etwa eine Anfrage für einen Reibwert $\hat{\mu}(s_0, t_0)$ an einer Anfrageposition $s_0$ und für einen Anfragezeitpunkt $t_0$ an die Datenverarbeitungsvorrichtung 10 senden, welche diese Anfrage über die Schnittstelle 20 empfangen kann. Die Datenverarbeitungsvorrichtung 10 kann ferner dazu ausgelegt und/oder eingerichtet sein, den entsprechenden Reibwert $\hat{\mu}(s_0, t_0)$ zu ermitteln, wie voranstehend und nachfolgend im Detail beschrieben, und den Reibwert $\hat{\mu}(s_0, t_0)$ über die Schnittstelle 20 an den Verkehrsteilnehmer 22 zu senden.

Die Datenverarbeitungsvorrichtung 10 kann insbesondere einen oder mehrere Server bezeichnen und/oder umfassen. Beispielsweise kann die Datenverarbeitungsvorrichtung 10 in einer Cloud-Umgebung und/oder einer Cloud-Computerumgebung realisiert sein.

Des Weiteren weist die Datenverarbeitungsvorrichtung 10 ein Machine-Learning-System 15 auf. Das Machine-Learning-System 15 kann für eine Anwendung einer Regressionsmethode zur Ermittlung zumindest eines Teils eines Semivariogramms und/oder zur Ermittlung von deterministischen Funktionen des Trends eingerichtet sein, wie in nachfolgenden Figuren im Detail erläutert. Auch kann das Machine-Learning-System 15 ein neuronales Netz 15, insbesondere ein vielschichtiges neuronales Netz 15, aufweisen. Alternativ oder zusätzlich kann die Datenverarbeitungsvorrichtung 10 auch mit einem externen Machine-Learning-System 15 gekoppelt sein, etwa über eine geeignete Datenschnittstelle. Fig. 2 zeigt ein System 100 mit einer Datenverarbeitungsvorrichtung 10 gemäß einem Ausführungsbeispiel der Erfindung. Sofern nicht anders beschrieben, weist die Datenverarbeitungsvorrichtung 10 der Figur 2 dieselben Elemente und Merkmale wie die Datenverarbeitungsvorrichtung 10 der Figur 1 auf.

Das System 100 weist eine Wetterinformationsstation 102 auf, welche der Datenverarbeitungsvorrichtung 10 aktuelle und/oder vorhergesagte Wetterdaten, wie beispielsweise Temperatur, Luftdruck, Luftfeuchtigkeit, Niederschlagsrate oder Ähnliches, bereitstellt.

Weiter weist das System 100 eine Straßensensorstation 104 auf, welche der Datenverarbeitungsvorrichtung 10 Straßensensorikdaten und/oder Straßensensordaten, wie beispielsweise Glättesensordaten, Feuchtigkeitssensordaten, Temperaturdaten oder Ähnliches, bereitstellt.

Der Datenverarbeitungsvorrichtung 10 werden ferner Fahrzeugsensordaten von einem oder mehreren Fahrzeugen 106 bereitgestellt. Die Fahrzeugsensordaten können etwa Daten von Beschleunigungssensoren, Gyrosensoren, ESP-Sensoren, Drehratensensoren oder dergleichen sein. Diese Daten können etwa drahtlos über ein Telefonnetz, insbesondere ein Mobilfunknetz, an die Datenverarbeitungsvorrichtung 10 übermittelt werden.

Optional weist das System 100 eine Verbindung zum Internet 108 auf, über welche zusätzliche Daten bezüglich einer Fahrbahn und/oder eines Straßennetzes von der Datenverarbeitungsvorrichtung 10 abgefragt werden können.

Basierend auf den Wetterdaten, den Straßensensorikdaten, den Fahrzeugsensordaten und/oder den weiteren Daten kann die Datenverarbeitungsvorrichtung 10 orts- und zeitabhängige Reibmesswerte $\mu(s_i, t_i)$, 16 ermitteln. Hierzu können die Wetterdaten, die Straßensensorikdaten, die Fahrzeugsensordaten und/oder die weiteren Daten etwa mittels eines Particle-Filters und/oder eines Kalman-Filters in Zeitfolgen verarbeitet werden, um einen orts- und zeitabhängigen Reibmesswert 16 zu aggregieren.

Dieser Reibmesswert 16 kann dann an den Verkehrsteilnehmer 22 über die Schnittstelle 20 der Datenverarbeitungsvorrichtung 10 gesendet werden, um dem Verkehrsteilnehmer 22 eine Information über den derzeitigen Reibwert zu übermitteln.

Alternativ oder zusätzlich können die Reibmesswerte 16 in einem Datensatz 14 zusammengefasst werden und in dem Datenspeicher 12 der Datenverarbeitungsvorrichtung 10 zur Weiterverarbeitung hinterlegt werden. Wie voranstehend und nachfolgend detailliert erläutert, kann die Datenverarbeitungsvorrichtung 10 basierend auf den Reibmesswerten 16 einen oder mehrere Reibwerte an einer Fahrbahnposition und/oder für einen Zeitpunkt ermitteln, an welchen keine Reibmesswerte 16 zur Verfügung stehen. Derart ermittelte Reibwerte können dann an den Verkehrsteilnehmer 22 übermittelt werden.

Des Weiteren kann die Datenverarbeitungsvorrichtung 10 dazu eingerichtet sein, basierend auf den Reibmesswerten 16 mehrere Reibwerte für unterschiedliche Fahrbahnpositionen und für unterschiedliche Zeitpunkte zu ermitteln und eine Reibwertkarte zu erstellen. Die Reibwertkarte kann dabei eine Straßenkarte mit darin eingetragenen Reibwerten bezeichnen. Auch kann eine solche Reibwertkarte dem Verkehrsteilnehmer 22 übersendet werden.

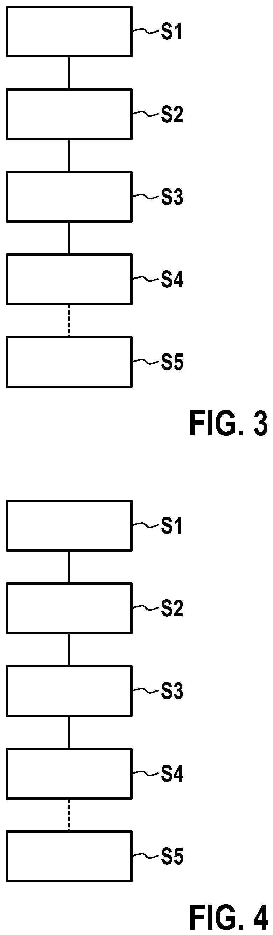

Fig. 3 zeigt ein Flussdiagramm zur Illustration von Schritten eines Verfahrens zum Ermitteln eines Reibwerts $\hat{\mu}$ gemäß einem Ausführungsbeispiel der Erfindung.

In einem Schritt S1 wird ein Datensatz 14 mit einer beliebigen Anzahl von Reibmesswerten $\mu(s_i, t_i)$, mit i=1..., etwa in einem Datenspeicher 18 einer Datenverarbeitungsvorrichtung 10 bereitgestellt, wobei $s_i$ eine Messposition, Ortskoordinaten der Messposition und/oder einen Ortsvektor der Messposition und $t_i$ einen Messzeitpunkt bezeichnen. Der Datensatz 14 kann dabei die Reibmesswerte 16, wie in Figur 1 beschrieben, aufweisen. Allgemein bezeichnet jeder der Reibmesswerte $\mu(s_i, t_i)$ einen Reibungskoeffizienten zwischen einer Fahrbahn und einem Verkehrsteilnehmer 22, insbesondere zwischen einer Fahrbahn und einem Fahrzeug 22, etwa einem Reifen des Fahrzeugs 22. Die Reibmesswerte $\mu(s_i, t_i)$ können in Schritt S1 auch, wie voranstehend in Bezug auf Figur 2 beschrieben, basierend auf Wetterdaten, Straßensensorikdaten, Fahrzeugsensordaten und/oder weiteren Daten etwa mittels der Datenverarbeitungsvorrichtung 10 ermittelt werden.

In einem Schritt S2 wird ein räumlicher und zeitlicher Zusammenhang zwischen zumindest einer Teilmenge der Reibmesswerte $\mu(s_i, t_i)$, mit i=1...N, basierend auf einem Semivariogramm ermittelt. Gleichsam kann in Schritt S2 ein Semivariogramm ermittelt werden. Insbesondere kann hierzu ein Kriging-Verfahren verwendet werden, beispielsweise ein "Ordinary Kriging", ein "Simple Kriging" und/oder ein "Universal Kriging".

Hierzu kann eine Semivarianz und/oder eine Kovarianz zwischen jeweils zwei Reibmesswerten $\mu(s_i, t_i)$ der Teilmenge (i=1...N) von Reibmesswerten ermittelt werden. Mit anderen Worten kann für jeden Reibmesswert $\mu(s_i, t_i)$ der Teilmenge die Semivarianz und/oder die Kovarianz zu allen weiteren Reibmesswerten $\mu(s_j, t_j)$ der Teilmenge ermittelt werden, wobei j ungleich i ist. Die ermittelten Semivarianzen können anschließend in einer Semivarianzmatrix zusammengefasst werden. Alternativ oder zusätzlich können die Kovarianzen in einer Kovarianzmatrix zusammengefasst werden.

Die Semivarianz $\gamma$ kann für eine Variable Z an den Orten s und s+h zu den Zeiten t und t+$\Delta$ beispielsweise in

folgender mathematischen Formel beschrieben werden:

$$\gamma(h,\Delta) = \frac{1}{2}\text{Var}\big[\big(Z(s,t) - Z(s+h, t+\Delta)\big)\big],$$

wobei der Zusammenhang zwischen Semivarianz $\gamma$ und Kovarianz $C(h,\Delta)$ durch folgende Formel beschrieben werden kann, etwa sofern ein endlicher Wert für $\gamma(\infty,\infty)$, $\gamma(h,\Delta)$ existiert:

$$C(h,\Delta) = \gamma(\infty,\infty) - \gamma(h,\Delta).$$

Die Semivarianz und die Kovarianz können somit als Maß für eine Streuung und/oder Korrelation der Reibmesswerte $\mu(s_i, t_i)$ herangezogen werden.

Die Semivarianz und/oder die Kovarianz kann für jeden Reibmesswert $\mu(s_i, t_i)$ der Teilmenge i=1...N ermittelt werden. Etwa können die Semivarianzen $\gamma_{i,j}$ zwischen den Reibmesswerten $\mu_i$ und $\mu_j$ für alle Reibmesswerte der Teilmenge ermittelt werden. Zur mathematischen Vereinfachung können die Semivarianzen und/oder die Kovarianzen dabei in Abhängigkeit des räumlichen Abstandes $\Delta s_{i,j} = s_i - s_j$ und/oder in Abhängigkeit des zeitlichen Abstandes $\Delta t_{i,j} = t_i - t_j$ bestimmt werden.

Ferner kann in Schritt S2 ein funktionaler Zusammenhang zwischen den Semivarianzen, den Kovarianzen und/oder zwischen beliebigen mit den Semivarianzen korrelierenden Größen ermittelt werden. Insbesondere kann dazu eine geschlossene analytische Funktion an die ermittelten Semivarianzen, die Kovarianzen und/oder an mit den Semivarianzen korrelierenden Größen gefittet werden.

In einem weiteren Schritt S3 wird basierend auf dem Semivariogramm und/oder basierend auf einem Kriging-Verfahren ein Wichtungsfaktor $w_i(s_i,t_i)$ für jeden Reibmesswert $\mu(s_i, t_i)$ ermittelt, wobei die Wichtungsfaktoren jeweils einen räumlichen und zeitlichen Zusammenhang zwischen dem zugehörigen Reibmesswert $\mu(s_i, t_i)$ und dem zu bestimmenden Reibwert $\hat{\mu}$ an einer Fahrbahnposition $s_0$ und zu einem Zeitpunkt $t_0$ angeben, wobei der Zeitpunkt $t_0$ in der Vergangenheit, der Gegenwart oder der Zukunft liegen kann. Eine Summe aller Wichtungsfaktoren $w_i$, i=1...N, ist dabei eins.

In einem weiteren Schritt S4 wird letztlich der zu bestimmende Reibwert $\hat{\mu}$ an der Fahrbahnposition $s_0$ und/oder zu dem Zeitpunkt $t_0$ unter Bilden eines gewichteten Mittelwertes bestimmt, wobei der gewichtete Mittelwert mit einer Summe von mit den jeweiligen Wichtungsfaktoren $w_i$ gewichteten Reibmesswerten $\mu(s_i, t_i)$ korreliert und/oder durch diese Summe gegeben ist, wie in nachfolgender Formel angegeben:

$$\hat{\mu}(s_0, t_0) = \sum_{i=1}^{N} w_i(s_i,t_i)\mu(s_i,t_i) = \boldsymbol{w}^T\boldsymbol{\mu}.$$

Mit anderen Worten kann der Reibwert $\hat{\mu}$ an der Fahrbahnposition $s_0$ und/oder zu dem Zeitpunkt $t_0$ durch die Summe der Reibwerte $\mu(s_i, t_i)$ der Teilmenge i=1...N, jeweils multipliziert mit dem zugehörigen Wichtungsfaktor $w_i$, welcher den räumlichen und/oder zeitlichen Zusammenhang zwischen dem zu bestimmenden Reibwert und dem jeweiligen Reibmesswert $\mu(s_i, t_i)$ angibt, berechnet werden.

Unter Verwendung des "Ordinary Krigings" ergibt sich somit der folgende mathematische Zusammenhang für den Reibwert $\hat{\mu}$ an der Fahrbahnposition $s_0$ und/oder zu dem Zeitpunkt $t_0$:

$$\hat{\mu}(s_0, t_0) = \sum_{i=1}^{N} w_i\mu(s_i,t_i) = \boldsymbol{w}^T\boldsymbol{\mu} = \big[\boldsymbol{c_0} - \boldsymbol{1}\lambda_{\hat{\mu}(s_0)}\big]\Sigma^{-1}\boldsymbol{\mu},$$

mit einem Vektor

$$\boldsymbol{c_0} = \big[\gamma(\infty,\infty) - \gamma\big(\Delta s_{1,0},\Delta t_{1,0}\big) \quad ... \quad \gamma(\infty,\infty) - \gamma\big(\Delta s_{N,0},\Delta t_{N,0}\big)\big]^T,$$

der transponierten Einheitsmatrix der Kovarianzmatrix $\boldsymbol{1} = \begin{bmatrix}1 & ... & 1\end{bmatrix}^T$, mit $N$ Elementen,

$$\Sigma = \begin{bmatrix} \gamma(\infty,\infty) - \gamma(0,0) & \gamma(\infty,\infty) - \gamma(\Delta s_{1,2}, \Delta t_{1,2}) & \cdots & \gamma(\infty,\infty) - \gamma(\Delta s_{1,N}, \Delta t_{1,N}) \\ \gamma(\infty,\infty) - \gamma(\Delta s_{2,1}, \Delta t_{2,1}) & \gamma(\infty,\infty) - \gamma(0,0) & \cdots & \gamma(\infty,\infty) - \gamma(\Delta s_{2,N}, \Delta t_{2,N}) \\ \vdots & \vdots & \ddots & \vdots \\ \gamma(\infty,\infty) - \gamma(\Delta s_{N,1}, \Delta t_{N,1}) & \gamma(\infty,\infty) - \gamma(\Delta s_{N,2}, \Delta t_{N,2}) & \cdots & \gamma(\infty,\infty) - \gamma(0,0) \end{bmatrix},$$

und der Substitution

$$\lambda_{\hat{\mu}(s_0)} = \frac{\mathbf{1}^T \Sigma^{-1} \mathbf{c_0} - 1}{\mathbf{1}^T \Sigma^{-1} \mathbf{c_0}}.$$

Dies erlaubt somit eine Berechnung des Reibwertes $\hat{\mu}$ basierend auf der Semivarianzmatrix, basierend auf der Kovarianzmatrix und/oder basierend auf dem Semivariogramm.

Zudem kann die Varianz und/oder die Unsicherheit des derart ermittelten Reibwertes $\hat{\mu}$ über nachfolgende Formel berechnet werden:

$$\sigma_{\hat{\mu}(s_0)} = \lambda_{\hat{\mu}(s_0)} + \sum_{i=1}^{N} w_i \gamma(s_i - s_0, t_i - t_0).$$

Die Varianz des Reibwertes $\hat{\mu}$ kann somit einen ersten Term aufweisen, welcher proportional zur Semivarianzmatrix und/oder proportional zur Kovarianzmatrix ist. Auch kann die Varianz einen zweiten Term aufweisen, welcher proportional zur Summe der mit den Wichtungsfaktoren $w_i$ gewichteten Semivarianzen sein kann. Mit anderen Worten kann der zweite Term der Varianz durch die Summe der mit den jeweiligen Wichtungsfaktoren $w_i$ multiplizierten Semivarianzen gegeben sein, wobei die Summe über die N Reibmesswerte der Teilmenge läuft.

Die voranstehend beschriebenen Schritte S1 bis S4, insbesondere die Schritte S2 bis S4 und/oder S3 bis S4, können auch mehrfach durchlaufen werden, so dass an mehreren unterschiedlichen Fahrbahnpositionen und zu unterschiedlichen Zeitpunkten Reibwerte $\hat{\mu}$ ermittelt werden können. In einem optionalen Schritt S5 kann basierend auf dieser Mehrzahl von ermittelten Reibwerten $\hat{\mu}$ eine Reibwertkarte erstellt werden, etwa durch Eintragen der Reibwerte $\hat{\mu}$ in eine Straßenkarte. Zudem können einzelne Reibwerte $\hat{\mu}$ auch, etwa über die Schnittstelle 20, an einen Verkehrsteilnehmer 22 übermittelt werden. Auch kann die Reibwertkarte an den Verkehrsteilnehmer 22 übermittelt werden und/oder die Reibwertkarte kann etwa auf einer Benutzeroberfläche der Datenverarbeitungsvorrichtung 10 ausgegeben und/oder in dem Datenspeicher 12 hinterlegt werden.

Des Weiteren kann in Schritt S2 zumindest ein Teil des Semivariogramms, insbesondere die Semivarianzen und/oder die Kovarianzen, unter Verwendung eines Machine-Learning-Systems 15, etwa einem neuronalen Netz 15 oder dergleichen, ermittelt werden. Optional kann hierzu im Schritt S2 das Machine-Learning-System 15 basierend auf einem Lerndatensatz von Reibmesswerten angelernt werden, wobei der Lerndatensatz aktuell ermittelte Reibmesswerte und/oder andere Reibmesswerte enthalten kann. Alternativ oder zusätzlich können angelernte Parameterwerte des Machine-Learning-Systems 15, etwa Gewichte einzelner Knoten in einem Multilayer-Neuronalen-Netz 15, basierend auf aktuell ermittelten Reibmesswerten angepasst werden. Durch das Lernen der Erstellung des Semivariogramms unter Verwendung eines Machine-Learing-Systems 15 können für jeden Ort einzeln und/oder mit hoher Präzision die voranstehend beschriebenen Funktionen parametrisiert werden. So können eine erhöhte Flexibilität und Genauigkeit der Reibwertschätzung sowie eine bessere lokale Anpassung des Verfahren erreicht werden. Auch ist es möglich, die Parameterwerte des Machine-Learning-Systems 15 kontinuierlich durch Onlinelernen zu adaptieren und/oder zu verbessern.

Zusammenfassend kann das Semivariogramm auch durch eine Methode des maschinellen Lernens unter Verwendung des Machine-Learning-Systems 15 für alle Orte definiert werden. Denkbar sind Regressionsmethoden und/oder die Verwendung eines Multilayer-Neuronalen-Netzes 15 (Feed-Forward). Als Inputwerte kommen die Wetterbzw. Fahrzeugdaten und ihre Orts- und Zeitbeziehung zum gesuchten Reibwertpunkt in Frage. Ergebnis können die Parameter der Funktion $Z(s, t)$ für einen zu bestimmenden Reibwert sein. Beim Anlernen lässt sich zwischen Offline- und Onlinelernen des Machine-Learning-Systems 15 unterscheiden. Beim Offlinelernen wird das Machine-Learning-System 15 im Vorhinein mit einem Lerndatensatz angelernt. Anschließend werden die Modelle mit festem Parametersatz zur Bestimmung fester Semivariogramme weiterer Orte verwendet. Beim Onlinelernen wird das Machine-Learning-System 15 während des Betriebes angelernt und mit aktuellen, angepassten Lerndaten bestimmter Orte immer wieder angepasst. Somit kann zu jedem Berechnungszeitschritt ein neues Semivariogramm für jeden Ort bestimmt werden.

Fig. 4 zeigt ein Flussdiagramm zur Illustration von Schritten eines Verfahrens zum Ermitteln eines Reibwerts $\hat{\mu}$ gemäß einem Ausführungsbeispiel der Erfindung.

Analog dem Schritt S1 der Figur 3, wird in Schritt S1 ein Datensatz 14 mit einer beliebigen Anzahl von Reibmesswerten $\mu(s_i, t_i)$, mit i=1..., etwa in einem Datenspeicher 18 einer Datenverarbeitungsvorrichtung 10 bereitgestellt, wobei $s_i$ eine Messposition, Ortskoordinaten der Messposition und/oder einen Ortsvektor der Messposition und $t_i$ einen Messzeitpunkt bezeichnen. Der Datensatz 14 kann dabei die Reibmesswerte 16, wie in Figur 1 beschrieben aufweisen. Die Reibmesswerte $\mu(s_i, t_i)$ können in Schritt S1 auch, wie voranstehend in Bezug auf Figur 2 beschrieben, basierend auf Wetterdaten, Straßensensorikdaten, Fahrzeugsensordaten und/oder weiteren Daten etwa mittels der Datenverarbeitungsvorrichtung 10 ermittelt werden.

In einem Schritt S2 wird ein Trend zumindest einer Teilmenge der Reibmesswerte unter Zerlegen jedes Reibmesswertes $\mu(s_i, t_i)$ der Teilmenge i=1...N in eine erste Komponente zur Beschreibung des Trends und eine zweite Komponente zur Beschreibung statistischer Schwankungen der Reibmesswerte $\mu(s_i, t_i)$ modelliert. Die erste Komponente kann dabei ein erster Term und die zweite Komponente kann ein zweiter Term sein. Mit anderen Worten können die Reibmesswerte $\mu(s_i, t_i)$ als Zufallsvariable modelliert werden, so dass jeder Reibmesswert aus den zwei Komponenten bestehen kann. Die erste Komponente kann durch eine Funktion $g(s, t, ...)$, die den lokalen Trend modelliert, repräsentiert sein und die zweite Komponente kann durch eine Zufallsvariable $\varepsilon(s, t)$ repräsentiert sein. Die Reibmesswerte können somit wie folgt dargestellt werden:

$$\mu(s) = g(s, t, ...) + \epsilon(s, t).$$

Es sei an dieser Stelle bemerkt, dass eine räumliche und eine zeitliche Zeitabhängigkeit der Reibmesswerte und/oder des zu ermittelnden Reibwertes berücksichtigt sein kann. Die Zeitkomponente bzw. die zeitliche Abhängigkeit kann beispielsweise analog zu der Beschreibung der Figur 3 berücksichtigt werden. Ebenso kann der Trend eine räumliche und/oder zeitliche Abhängigkeit der Reibmesswerte abbilden und/oder berücksichtigen. Mit anderen Worten kann der Trend räumlicher und/oder zeitlicher Natur sein.

Die erste Komponente kann eine Linearkombination aus einer Mehrzahl von deterministischen Funktionen, beispielsweise über Ort und/oder Zeit, und einer Mehrzahl von Koeffizienten aufweisen. Mit anderen Worten kann die erste Komponente als Linearkombination

$$g(s, t ...) = \sum_{l=0}^{L} a_l f_l(s, t ...)$$

der deterministischen Funktionen $f_0, f_1, ..., f_L$, den Koeffizienten $a_l \in \mathbb{R}\{0\}$ und der Konvention $f_0(s, t, ...) = 1$ dargestellt werden.

Dabei kann der in der ersten Komponente modellierte Trend mit wenigstens einer die Reibmesswerte der Teilmenge beeinflussenden Einflussgröße korrelieren, wobei die wenigstens eine Einflussgröße Wetterdaten, geographische Daten und/oder eine zeitliche Abhängigkeit umfassen kann. Die Modellierung des Trends kann somit in vorteilhafter Weise eine Flexibilität des Verfahrens erhöhen, da gewisse Abhängigkeiten, Einflussgrößen und/oder Einflüsse berücksichtigt werden können. Beispielsweise kann in dem Trend berücksichtigt werden, dass etwa bei niedrigen geographischen Breiten ein höherer Reibwert zu erwarten ist als bei hohen geographischen Breiten. Auch kann Berücksichtigung finden, dass etwa bei Regen oder Schnee ein geringerer Reibwert zu erwarten ist als bei trockenem Wetter. Ebenso kann berücksichtigt werden, dass etwa im Sommer ein höherer Reibwert als im Winter zu erwarten ist.

Des Weiteren kann optional in Schritt S2 zumindest ein Teil der ersten Komponente unter Verwendung eines Machine-Learning-Systems 15 ermittelt werden. Insbesondere können die deterministischen Funktionen $f_0, f_1, ..., f_L$, welche als Modellparameter des Trends angesehen werden können, unter Verwendung eines Machine-Learning-Systems 15, etwa einem neuronalen Netz 15 oder dergleichen, ermittelt werden. Das Machine-Learning-System 15 kann hierzu basierend auf einem Lerndatensatz von Reibmesswerten angelernt werden. Alternativ oder zusätzlich können angelernte Parameterwerten des Machine-Learning-Systems 15, etwa die Gewichte von Knoten eines neuronalen Netzes, basierend auf aktuell ermittelten Reibmesswerten angepasst werden.

Mit anderen Worten kann voranstehend erläuterte Linearkombination der ersten Komponente und/oder die deterministischen Funktionen der Linearkombination des lokalen Trends durch ein angelerntes Machine-Learning-System 15 generiert werden. Eingangsgrößen des Machine-Learning-Systems 15 können Wetterdaten oder Daten der Topologie der Orte für die der lokale Trend interessiert sein. Ausgangsgrößen können die deterministischen Funktionen der Linearkombination, die den lokalen Trend modellieren, sein. Beim Anlernen lässt sich zwischen Offline- und Onlinelernen des Machine-Learning-Systems 15 unterscheiden. Beim Offlinelernen wird das Machine-Learning-System 15 im Vorhinein mit dem Lerndatensatz angelernt. Anschließend werden die Modelle mit festem Parametersatz zur Bestimmung fester lokaler Trends weiterer Orte verwendet. Beim Onlinelernen wird das Machine-Learning-System 15 im Betrieb angelernt und mit aktuellen, angepassten Lerndaten bestimmter Orte immer wieder angepasst. Somit kann zu jedem Berechnungszeitschritt ein neuer, verbesserter lokaler Trend für jeden Ort bestimmt werden.

Durch die Modellierung eines räumlichen Trends können weitere Informationen mitberücksichtigt werden. Zum Beispiel ist es in Schweden wahrscheinlicher einen niedrigen Reibwert $\mu$ zu erhalten, als es der Fall in Spanien ist. Dieser Zusammenhang kann durch Berücksichtigung weiterer Größen wie beispielsweise Wetterdaten und/oder Geografie dargestellt werden. Des Weiteren bietet das Lernen mittels Machine-Learning-System 15 zur Erstellung des lokalen Trends den Vorteil, dass genauere und aktuelle Trends für jeden Ort generiert werden können. So werden eine erhöhte Flexibilität und Genauigkeit der Reibwertermittlung sowie eine bessere lokale Anpassung erreicht. Auch ist es möglich, das Verfahren, das Machine-Learning-System 15 und/oder die Datenverarbeitungsvorrichtung 10 kontinuierlich durch Onlinelernen zu adaptieren und/oder zu verbessern.

Des Weiteren wird, analog der Beschreibung der Figur 3, ein räumlicher und/oder zeitlicher Zusammenhang zwischen zumindest einer Teilmenge der Reibmesswerte $\mu(s_i, t_i)$, mit i=1... N, basierend auf einem Semivariogramm ermittelt. Gleichsam kann in Schritt S2 ein Semivariogramm ermittelt werden. Insbesondere kann hierzu ein Kriging-Verfahren verwendet werden, beispielsweise ein "Ordinary Kriging", ein "Simple Kriging" und/oder ein "Universal Kriging".

Hierzu kann eine Semivarianz und/oder eine Kovarianz zwischen jeweils zwei Reibmesswerten $\mu(s_i)$ der Teilmenge (i=1...N) von Reibmesswerten ermittelt werden. Mit anderen Worten kann für jeden Reibmesswert $\mu(s_i)$ der Teilmenge die Semivarianz und/oder die Kovarianz zu allen weiteren Reibmesswerten $\mu(s_j)$ ermittelt werden, wobei j ungleich i ist. Die ermittelten Semivarianzen können anschließend in einer Semivarianzmatrix zusammengefasst werden. Alternativ oder zusätzlich können die Kovarianzen in einer Kovarianzmatrix zusammengefasst werden.

Allgemein kann die Semivarianz $\gamma$ für eine Variable Z an den Orten s und s+h in folgender mathematischen Formel beschrieben werden:

$$\gamma(h) = \frac{1}{2}\mathrm{Var}\big[(Z(s) - Z(s + h))\big],$$

wobei der Zusammenhang zwischen Semivarianz $\gamma$ und Kovarianz $C(h)$ durch folgende Formel beschrieben werden kann:

$$C(h) = \gamma(\infty) - \gamma(h).$$

Die Semivarianz und die Kovarianz können somit als Maß für eine Streuung und/oder Korrelation der Reibmesswerte $\mu(s_i)$ herangezogen werden. Auch kann analog der Beschreibung zu Figur 3 eine Zeitkomponente und/oder eine zeitliche Abhängigkeit berücksichtigt werden.

Die Semivarianz und/oder die Kovarianz kann für jeden Reibmesswert $\mu(s_i)$ der Teilmenge i=1...N ermittelt werden. Etwa können die Semivarianzen $\gamma_{i,j}$ zwischen den Reibmesswerten $\mu_i$ und $\mu_j$ für alle Reibmesswerte ermittelt werden. Zur mathematischen Vereinfachung können die Semivarianzen und/oder die Kovarianzen dabei in Abhängigkeit des räumlichen Abstandes $\Delta s_{i,j} = s_i - s_j$ und/oder in Abhängigkeit des zeitlichen Abstandes $\Delta t_{i,j} = t_i - t_j$ bestimmt werden.

Ferner kann in Schritt S2 ein funktionaler Zusammenhang zwischen den Semivarianzen, den Kovarianzen und/oder zwischen beliebigen mit den Semivarianzen korrelierenden Größen ermittelt werden. Insbesondere kann dazu eine geschlossene analytische Funktion an die ermittelten Semivarianzen, die Kovarianzen und/oder an mit den Semivarianzen korrelierenden Größen gefittet werden.

In einem weiteren Schritt S3 wird, analog Schritt S3 der Figur 3, basierend auf dem Semivariogramm und/oder basierend auf einem Kriging-Verfahren ein Wichtungsfaktor $w_i(s_i)$ für jeden Reibmesswert $\mu(s_i)$ ermittelt, wobei die Wichtungsfaktoren jeweils einen räumlichen und/oder zeitlichen Zusammenhang zwischen dem zugehörigen Reibmesswert $\mu(s_i)$ und dem zu bestimmenden Reibwert $\hat{\mu}$ an einer Fahrbahnposition $s_0$ und/oder zu einem Zeitpunkt $t_0$ angeben, wobei der Zeitpunkt $t_0$ in der Vergangenheit, der Gegenwart oder der Zukunft liegen kann. Eine Summe aller Wichtungsfaktoren $w_i$, i=1...N, ist dabei eins.

In einem weiteren Schritt S4 wird, analog dem Schritt S4 der Figur 3, letztlich der zu bestimmende Reibwert $\hat{\mu}$ an der Fahrbahnposition $s_0$ und/oder zu dem Zeitpunkt $t_0$ unter Bilden eines gewichteten Mittelwertes bestimmt, wobei der gewichtete Mittelwert mit einer Summe von mit den jeweiligen Wichtungsfaktoren $w_i$ gewichteten Reibmesswerten $\mu(s_i, t_i)$ korreliert und/oder durch diese Summe gegeben ist, wie in nachfolgender Formel angegeben:

$$\hat{\mu}(s_0, t_0) = \sum_{i=1}^{N} w_i(s_i, t_i)\mu(s_i, t_i) = \boldsymbol{w}^T\boldsymbol{\mu}.$$

Mit anderen Worten kann der Reibwert $\hat{\mu}$ an der Fahrbahnposition $s_0$ und/oder zu dem Zeitpunkt $t_0$ durch die Summe der Reibwerte $\mu(s_i, t_i)$der Teilmenge i=1...N, jeweils multipliziert mit dem zugehörigen Wichtungsfaktor $w_i$, welcher den räumlichen und/oder zeitlichen Zusammenhang zwischen dem zu bestimmenden Reibwert und dem jeweiligen Reibmesswert $\mu(s_i, t_i)$angibt, berechnet werden. Die zeitliche Komponente ist in den voranstehenden und nachfolgenden Formeln nicht berücksichtigt. Analog der Beschreibung zu Figur 3 kann die zeitliche Abhängigkeit jedoch ebenso berücksichtigt werden.

Unter Verwendung des "Universal Krigings" sowie unter der Modellierung des lokalen Trends ergibt sich somit der folgende mathematische Zusammenhang für den Reibwert $\hat{\mu}$ an der Fahrbahnposition $s_0$:

$$\hat{\mu}(s_0, t_0) = \sum_{i=1}^{N} w_i\mu(s_i, t_i) = \boldsymbol{w}^T\boldsymbol{\mu} = \left[\boldsymbol{\gamma}_0 - F(F^T\Gamma^{-1}F)^{-1}\left(F^T\Gamma^{-1}\boldsymbol{\gamma}_0 - \boldsymbol{f}_0\right)\right]^T\Gamma^{-1}\boldsymbol{\mu},$$

mit einem Vektor

$$\boldsymbol{\gamma}_0 = [\gamma(s_1 - s_0, t_1 - t_0) \quad ... \quad \gamma(s_N - s_0, t_N - t_0)]^T,$$

den deterministischen Funktionen

$$\boldsymbol{f}_0 = [1 \quad f_1(s_0, t_0) \quad ... \quad f_N(s_0, t_0)]^T,$$

der transponierten Einheitsmatrix

$$\boldsymbol{1} = [1 \quad ... \quad 1]^T \quad , \text{mit } N \text{ Elementen,}$$

der Semivarianzmatrix

$$\Gamma = \begin{bmatrix} \gamma(0,0) & \gamma(s_1 - s_2, t_1 - t_2) & \cdots & \gamma(s_1 - s_N, t_1 - t_N) \\ \gamma(s_2 - s_1, t_2 - t_1) & \gamma(0,0) & \cdots & \gamma(s_2 - s_N, t_2 - t_N) \\ \vdots & \vdots & \ddots & \vdots \\ \gamma(s_N - s_1, t_N - t_1) & \gamma(s_N - s_2, t_N - t_2) & ... & \gamma(0,0) \end{bmatrix},$$

einer Matrix

$$F^T = \begin{bmatrix} 1 & 1 & \cdots & 1 \\ f_1(s_1, t_1, ...) & f_1(s_2, t_2, ...) & \cdots & f_1(s_N, t_N ...) \\ \vdots & \vdots & \ddots & \vdots \\ f_L(s_1, t_1, ...) & f_L(s_2, t_2, ...) & ... & f_L(s_N, t_N, ...) \end{bmatrix},$$

den Wichtungsfaktoren

$$\boldsymbol{w} = \Gamma^{-1}\left[\boldsymbol{\gamma}_0 - F(F^T\Gamma^{-1}F)^{-1}\left(F^T\Gamma^{-1}\boldsymbol{\gamma}_0 - \boldsymbol{f}_0\right)\right],$$

und der Substitution

$$\lambda = (F^T \Gamma^{-1} F)^{-1} (F^T \Gamma^{-1} \gamma_0 - f_0).$$

Dies erlaubt somit eine Berechnung des Reibwertes $\hat{\mu}$ basierend auf der Semivarianzmatrix, basierend auf der Kovarianzmatrix und/oder basierend auf dem Semivariogramm.

Zudem kann die Varianz und/oder die Unsicherheit des derart ermittelten Reibwertes $\hat{\mu}$ über nachfolgende Formel berechnet werden:

$$\sigma_{\hat{\mu}(s_0)} = \sum_{i=1}^{N} w_i \gamma(s_i - s_0, t_i - t_0) + \sum_{l=0}^{L} \lambda_l f_l(s_0, t_0)$$

Die Varianz des Reibwertes $\hat{\mu}$ kann somit einen ersten Term aufweisen, welcher proportional zur Summe der mit den Wichtungsfaktoren $w_i$ gewichteten Semivarianzen sein kann. Mit anderen Worten kann der erste Term der Varianz durch die Summe der mit den jeweiligen Wichtungsfaktoren $w_i$ multiplizierten Semivarianzen gegeben sein, wobei die Summe über die N Reibmesswerte der Teilmenge läuft. Auch kann die Varianz einen zweiten Term aufweisen, welcher proportional zur Summe der deterministischen Funktionen $f_i$ sein kann.

Die voranstehend beschriebenen Schritte S1 bis S4, insbesondere die Schritte S2 bis S4 und/oder S3 bis S4, können auch mehrfach durchlaufen werden, so dass an mehreren unterschiedlichen Fahrbahnpositionen und zu unterschiedlichen Zeitpunkten Reibwerte $\hat{\mu}$ ermittelt werden können. In einem optionalen Schritt S5 kann basierend auf dieser Mehrzahl von ermittelten Reibwerten $\hat{\mu}$ eine Reibwertkarte erstellt werden, etwa durch Eintragen der Reibwerte $\hat{\mu}$ in eine Straßenkarte. Zudem können einzelne Reibwerte $\hat{\mu}$ auch , etwa über die Schnittstelle 20, an einen Verkehrsteilnehmer 22 übermittelt werden. Auch kann die Reibwertkarte an den Verkehrsteilnehmer 22 übermittelt werden und/oder die Reibwertkarte kann etwa auf einer Benutzeroberfläche der Datenverarbeitungsvorrichtung 10 ausgegeben und/oder in dem Datenspeicher 12 hinterlegt werden.

**Patentansprüche**

1. Computerimplementiertes Verfahren zum Ermitteln eines Reibwertes ($\hat{\mu}$) einer Fahrbahn, das Verfahren aufweisend die Schritte:
Bereitstellen eines Datensatzes (14) mit Reibmesswerten ($\mu$) der Fahrbahn, wobei jeder der Reibmesswerte ($\mu$) einen Reibungskoeffizienten der Fahrbahn an einer Messposition ($s_i$) zu einem Messzeitpunkt ($t_i$) angibt; wobei das das Verfahren ferner die Schritte aufweist:

   Modellieren eines räumlichen und zeitlichen Zusammenhangs zwischen zumindest einer Teilmenge der Reibmesswerte ($\mu$) basierend auf einem Semivariogramm;
   Ermitteln eines Wichtungsfaktors ($w_i$) für jeden Reibmesswert ($\mu$) der Teilmenge von Reibmesswerten basierend auf dem Semivariogramm; und
   Ermitteln eines Reibwertes ($\hat{\mu}$) für eine Fahrbahnposition ($s_0$) und für einen Zeitpunkt ($t_0$) unter Bilden eines gewichteten Mittelwerts, wobei der gewichtete Mittelwert mit einer Summe von mit den jeweiligen Wichtungsfaktoren ($w_i$) gewichteten Reibmesswerten ($\mu$) der Teilmenge der Reibmesswerte korreliert.

2. Computerimplementiertes Verfahren nach Anspruch 1,
wobei der Schritt des Modellierens basierend auf dem Semivariogramm ein Ermitteln einer Semivarianz ($\gamma$) zwischen jeweils zwei Reibmesswerten ($\mu$) der Teilmenge der Reibmesswerte aufweist.

3. Computerimplementiertes Verfahren nach Anspruch 2,

   wobei die Semivarianzen ($\gamma$) jeweils in Abhängigkeit eines räumlichen Abstands ($\Delta s$) zwischen den Positionen der zwei Reibmesswerte ($\mu$) ermittelt werden; und
   wobei die Semivarianzen ($\gamma$) jeweils in Abhängigkeit eines zeitlichen Abstands ($\Delta t$) der Messzeitpunkte der zwei Reibmesswerte ($\mu$) ermittelt werden.

4. Computerimplementiertes Verfahren nach Anspruch 2 oder 3, wobei der Schritt des Modellierens basierend auf dem Semivariogramm ein Erstellen einer Semivarianzmatrix basierend auf den ermittelten Semivarianzen ($\gamma$) auf-

weist.

5. Computerimplementiertes Verfahren nach einem der Ansprüche 1 bis 4,

wobei der Schritt des Modellierens basierend auf dem Semivariogramm ein Ermitteln einer Kovarianz (C) zwischen jeweils zwei Reibmesswerten ($\mu$) der Teilmenge der Reibmesswerte aufweist; und/oder
wobei der Schritt des Modellierens basierend auf dem Semivariogramm ein Erstellen einer Kovarianzmatrix aufweist.

6. Computerimplementiertes Verfahren nach einem der voranstehenden Ansprüche,

wobei jeder der Wichtungsfaktoren ($w_i$) einen räumlichen und zeitlichen Zusammenhang zwischen dem zugehörigen Reibmesswert ($\mu$) und dem Reibwert ($\hat{\mu}$) angibt; und
wobei eine Summe der Wichtungsfaktoren ($w_i$) eins ist.

7. Computerimplementiertes Verfahren nach einem der Ansprüche 2 bis 6,

wobei der Schritt des Modellierens basierend auf dem Semivariogramm ein Ermitteln eines funktionellen Zusammenhangs zwischen den Semivarianzen ($\gamma$) und/oder zwischen mit den Semivarianzen ($\gamma$) korrelierenden Größen aufweist; und/oder
wobei der Schritt des Modellierens basierend auf dem Semivariogramm ein Fitten einer Funktion an die Semivarianzen ($\gamma$) und/oder an mit den Semivarianzen ($\gamma$) korrelierenden Größen aufweist.

8. Computerimplementiertes Verfahren nach einem der voranstehenden Ansprüche, weiter aufweisend:
Ermitteln einer Varianz ($\sigma$) und/oder einer Unsicherheit ($\sigma$) des ermittelten Reibwertes ($\hat{\mu}$) basierend auf den ermittelten Wichtungsfaktoren ($w_i$).

9. Computerimplementiertes Verfahren nach einem der voranstehenden Ansprüche, weiter aufweisend:

Ermitteln einer Mehrzahl von Reibwerten ($\hat{\mu}$) an einer Mehrzahl von Fahrbahnpositionen (s) und für eine Mehrzahl von Zeitpunkten (t); und
Erstellen einer Reibwertkarte basierend auf der Mehrzahl von ermittelten Reibwerten ($\mu$).

10. Computerimplementiertes Verfahren nach einem der voranstehenden Ansprüche, weiter aufweisend:

Empfangen, von einem Verkehrsteilnehmer (22), einer Anfrage für einen Reibwert ($\hat{\mu}$) an einer Anfrageposition ($s_0$) und/oder für einen Anfragezeitpunkt ($t_0$);
Ermitteln des Reibwertes ($\hat{\mu}$) an der Anfrageposition ($s_0$) und/oder für den Anfragezeitpunkt ($t_0$); und
Bereitstellen des ermittelten Reibwertes(jl) an den Verkehrsteilnehmer (22).

11. Datenverarbeitungsvorrichtung (10) zum Ermitteln eines Reibwertes ($\hat{\mu}$) einer Fahrbahn, wobei die Datenverarbeitungsvorrichtung (10) dazu eingerichtet ist, Schritte des Verfahrens nach einem der voranstehenden Ansprüche auszuführen.

12. Datenverarbeitungsvorrichtung (10) nach Anspruch 11, wobei die Datenverarbeitungsvorrichtung (10) einen Datenspeicher (12) zur Speicherung eines Datensatzes (14) von Reibmesswerten ($\mu$, 16) der Fahrbahn;

einen Prozessor (18); und
eine Schnittstelle (20) zum Übertragen eines Reibwertes ($\hat{\mu}$) aufweist.

**Claims**

1. Computer-implemented method for determining a friction value ($\hat{\mu}$) of a roadway, the method comprising the following steps:

providing a data set (14) having friction measurement values ($\mu$) of the roadway, wherein each of the friction measurement values ($\mu$) indicates a coefficient of friction of the roadway at a measurement position ($S_i$) at a

measurement time ($t_i$);
wherein the method furthermore comprises the following steps:

modelling a spatial and temporal relationship between at least one subset of the friction measurement values ($\mu$) on the basis of a semivariogram;
determining a weighting factor ($w_i$) for each friction measurement value ($\mu$) of the subset of friction measurement values on the basis of the semivariogram; and
determining a friction value ($\hat{\mu}$) for a roadway position ($S_0$) and for a time ($t_0$) with formation of a weighted average value, wherein the weighted average value correlates with a sum of friction measurement values ($\mu$) - weighted with the respective weighting factors ($w_i$) - of the subset of friction measurement values.

2.  Computer-implemented method according to Claim 1,
    wherein the step of modelling on the basis of the semivariogram comprises determining a semivariance ($\gamma$) between each two friction measurement values ($\mu$) of the subset of friction measurement values.

3.  Computer-implemented method according to Claim 2,

    wherein the semivariances ($\gamma$) are determined in each case as a function of a spatial distance ($\Delta s$) between the positions of the two friction measurement values ($\mu$); and
    wherein the semivariances ($\gamma$) are determined in each case as a function of a temporal distance ($\Delta t$) between the measurement times of the two friction measurement values ($\mu$).

4.  Computer-implemented method according to Claim 2 or 3, wherein the step of modelling on the basis of the semivariogram comprises creating a semivariance matrix on the basis of the determined semivariances ($\gamma$).

5.  Computer-implemented method according to any of Claims 1 to 4, wherein the step of modelling on the basis of the semivariogram comprises determining a covariance ($C$) between each two friction measurement values ($\mu$) of the subset of friction measurement values; and/or
    wherein the step of modelling on the basis of the semivariogram comprises creating a covariance matrix.

6.  Computer-implemented method according to any of the preceding claims,

    wherein each of the weighting factors ($w_i$) indicates a spatial and temporal relationship between the associated friction measurement value ($\mu$) and the friction value ($\mu$); and
    wherein a sum of the weighting factors ($w_i$) is one.

7.  Computer-implemented method according to any of Claims 2 to 6, wherein the step of modelling on the basis of the semivariogram comprises determining a functional relationship between the semivariances ($\gamma$) and/or between variables correlating with the semivariances ($\gamma$); and/or wherein the step of modelling on the basis of the semivariogram comprises fitting a function to the semivariances ($\gamma$) and/or to variables correlating with the semivariances ($\gamma$).

8.  Computer-implemented method according to any of the preceding claims, further comprising:
    determining a variance ($\sigma$) and/or an uncertainty ($\sigma$) of the determined friction value ($\hat{\mu}$) on the basis of the determined weighting factors ($w_i$).

9.  Computer-implemented method according to any of the preceding claims, further comprising:
    determining a plurality of friction values ($\mu$) at a plurality of roadway positions ($s$) and for a plurality of times ($t$); and
    creating a friction value map on the basis of the plurality of determined friction values ($\mu$).

10. Computer-implemented method according to any of the preceding claims, further comprising:

    receiving, from a road user (22), a request for a friction value ($\hat{\mu}$) at a request position ($s_0$) and/or for a request time ($t_0$);
    determining the friction value ($\mu$) at the request position ($s_0$) and/or for the request time ($t_0$); and
    providing the determined friction value ($\hat{\mu}$) to the road user (22).

11. Data processing device (10) for determining a friction value ($\hat{\mu}$) of a roadway, wherein the data processing device (10) is configured to carry out steps of the method according to any of the preceding claims.

12. Data processing device (10) according to Claim 11, wherein the data processing device (10) comprises a data memory (12) for storing a data set (14) of friction measurement values ($\mu$, 16) of the roadway;

> a processor (18); and
> an interface (20) for transmitting a friction value ($\hat{\mu}$).

**Revendications**

1. Procédé mis en œuvre par ordinateur pour déterminer un coefficient de frottement ($\hat{\mu}$) d'une chaussée, le procédé comportant les étapes suivantes :

> fourniture d'un ensemble de données (14) comprenant des coefficients de frottement mesurés ($\mu$) de la chaussée, dans lequel chacun des coefficients de frottement mesurés ($\mu$) indique un coefficient de frottement de la chaussée à une position de mesure ($S_i$) à un instant de mesure ($t_i$);
> dans lequel le procédé comporte en outre les étapes suivantes :
>
>> modélisation, sur la base d'un semi-variogramme, d'une relation spatiale et temporelle entre au moins un sous-ensemble des coefficients de frottement mesurés ($\mu$) ;
>> détermination d'un facteur de pondération ($w_i$) pour chaque coefficient de frottement mesuré ($\mu$) du sous-ensemble de coefficients de frottement mesurés sur la base du semi-variogramme ; et détermination d'un coefficient de frottement ($\hat{\mu}$) pour une position sur la chaussée ($S_0$) et pour un instant ($t_0$) en établissant une moyenne pondérée, dans lequel la moyenne pondérée est corrélée à une somme de coefficients de frottement mesurés ($\mu$), pondérés par les facteurs de pondération ($w_i$) respectifs, du sous-ensemble de coefficients de frottement mesurés.

2. Procédé mis en œuvre par ordinateur selon la revendication 1,
dans lequel l'étape de modélisation comporte, sur la base du semi-variogramme, une détermination d'une semivariance ($\gamma$) entre respectivement deux coefficients de frottement mesurés ($\mu$) du sous-ensemble des coefficients de frottement mesurés.

3. Procédé mis en œuvre par ordinateur selon la revendication 2,

> dans lequel les semi-variances ($\gamma$) sont respectivement déterminées en fonction d'une distance spatiale ($\Delta s$) entre les positions des deux coefficients de frottement mesurés ($\mu$) ; et
> dans lequel les semi-variances ($\gamma$) sont respectivement déterminées en fonction d'un écart temporel ($\Delta t$) entre les instants de mesure des deux coefficients de frottement mesurés ($\mu$).

4. Procédé mis en œuvre par ordinateur selon la revendication 2 ou 3, dans lequel l'étape de modélisation sur la base du semi-variogramme comporte l'établissement d'une matrice de semi-variance basée sur les semivariances ($\gamma$) déterminées.

5. Procédé mis en œuvre par ordinateur selon l'une quelconque des revendications 1 à 4, dans lequel l'étape de modélisation sur la base du semi-variogramme comporte une détermination d'une covariance (C) entre respectivement deux coefficients de frottement mesurés ($\mu$) du sous-ensemble des coefficients de frottement mesurés ; et/ou dans lequel l'étape de modélisation sur la base du semivariogramme comprend l'établissement d'une matrice de covariance.

6. Procédé mis en œuvre par ordinateur selon l'une quelconque des revendications précédentes,

> dans lequel chacun des facteurs de pondération ($w_i$) indique une relation spatiale et temporelle entre le coefficient de frottement mesuré ($\mu$) associé et le coefficient de frottement ($\hat{\mu}$) ; et
> dans lequel une somme des facteurs de pondération ($w_i$) est égale à un.

7. Procédé mis en œuvre par ordinateur selon l'une quelconque des revendications 2 à 6, dans lequel l'étape de modélisation sur la base du semi-variogramme comporte une détermination d'une relation fonctionnelle entre les semi-variances ($\gamma$) et/ou entre des grandeurs en corrélation avec les semi-variances ($\gamma$) ; et/ou dans lequel l'étape de modélisation sur la base du semivariogramme comporte un ajustement d'une fonction aux

semi-variances ($\gamma$) et/ou à des grandeurs en corrélation avec les semi-variances ($\gamma$).

8. Procédé mis en œuvre par ordinateur selon l'une quelconque des revendications précédentes, comportant en outre :
la détermination, sur la base des facteurs de pondération ($w_i$) déterminés, d'une variance ($\sigma$) et/ou d'une incertitude ($\sigma$) du coefficient de frottement ($\hat{\mu}$) déterminé.

9. Procédé mis en œuvre par ordinateur selon l'une quelconque des revendications précédentes, comportant en outre :

la détermination d'une pluralité de coefficients de frottement ($\hat{\mu}$) à une pluralité de positions sur la chaussée (s) et pour une pluralité d'instants (t) ; et
l'établissement d'une carte de coefficients de frottement sur la base de la pluralité de coefficients de frottement ($\mu$) déterminés.

10. Procédé mis en œuvre par ordinateur selon l'une quelconque des revendications précédentes, comportant en outre :

la réception, en provenance d'un usager de la route (22), d'une demande d'un coefficient de frottement ($\mu$) à une position de demande ($s_0$) et/ou pour un instant de demande ($t_0$) ;
la détermination du coefficient de frottement ($\mu$) à la position de demande ($s_0$) et/ou pour l'instant de demande ($t_0$) ; et
la fourniture du coefficient de frottement ($\hat{\mu}$) déterminé à l'usager de la route (22).

11. Dispositif de traitement de données (10) pour déterminer un coefficient de frottement ($\hat{\mu}$) d'une chaussée, dans lequel le dispositif de traitement de données (10) est conçu pour mettre en œuvre des étapes du procédé selon l'une quelconque des revendications précédentes.

12. Dispositif de traitement de données (10) selon la revendication 11, dans lequel le dispositif de traitement de données (10) comprend une mémoire de données (12) destinée à stocker un ensemble de données (14) de coefficients de frottement mesurés ($\mu$, 16) de la chaussée ;

un processeur (18) ; et
une interface (20) pour la transmission d'un coefficient de frottement ($\hat{\mu}$).

FIG. 1

FIG. 2

S1

S2

S3

S4

S5

**FIG. 3**

S1

S2

S3

S4

S5

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KWON TAE J et al.** Modelling of winter road surface temperature. *4TH ICTIS,* 2017, 551-556
- **KYLE SCHMITT et al.** A Gaussian Process-Based Approach for Handling Uncertainty in Vehicle Dynamics Simulation. *IMECE,* 2008, 617-628